# EUROPÄISCHE PATENTSCHRIFT

(11) **EP 1 606 546 B1**
(45) Veröffentlichungstag und Bekanntmachung des Hinweises auf die Patenterteilung: **28.10.2009**
(21) Anmeldenummer: 04722564.4
(22) Anmeldetag: 23.03.2004
(51) Int. Cl.: F16L 41/02, F16L 9/00, F16L 55/11, B21C 37/15, F24F 13/02

(54) **ROHR MIT TRENNWAND**
TUBE PROVIDED WITH A PARTITION
CONDUIT A CLOISON

(30) Priorität: 24.03.2003 DE 20304739 U
(43) Veröffentlichungstag der Anmeldung: 21.12.2005
(73) Patentinhaber: Frenger Systemen BV Heiz- und Kühltechnik GmbH, 64823 Gross-Umstadt (DE)
(72) Erfinder: MENGE, Hans, Werner, 64823 Gross-Umstadt (DE); MENGE, Klaus, 64823 Gross-Umstadt (DE)
(74) Vertreter: KEIL & SCHAAFHAUSEN Patentanwälte
(86) Internationale Anmeldenummer: PCT/EP2004/003041
(87) Internationale Veröffentlichungsnummer: WO 2004/085907

(56) Entgegenhaltungen:
- WO-A-96/27456
- WO-A-02/076650
- WO-A-02/087814
- DE-A- 3 110 454

## Beschreibung

Die Erfindung betrifft ein Rohr mit einem einen Strömungskanal umschließenden Mantel, wobei der Strömungskanal von wenigstens einer Trennwand in Kanalabschnitte unterteilt ist.

Derartige Rohre werden bspw. als Verteiler- oder Sammelrohre für Rohrregister eines Strahlflächenaufbaus zum Temperieren von Räumen eingesetzt. Von diesen Rohren zweigen dann von einem Heiz- oder Kühlmedium, bspw. temperiertes Wasser, durchströmte Registerrohre ab, wobei die Registerrohre mäanderförmig durchströmt werden. Hierzu ist es erforderlich, dass in den Verteiler- oder Sammelrohren Wasserumlenkungen vorgesehen sind, die ein gerades Durchströmen des Heiz- oder Kühlmediums durch diese Rohre verhindert und das Medium in die Registerrohre leitet.

Zum Einbringen der Trennwände (Trennplättchen) ist es bisher bekannt, die häufig als Vierkantrohre ausgebildeten Rohre an einer Kante so weit einzusägen, dass eine Trennwand in den entstehenden Schlitz eingeschlagen werden kann. Zur Abdichtung der Rohre ist es hierbei erforderlich, dass der Schlitz anschließend wieder zugeschweißt wird. Dieses Verfahren ist sehr zeitaufwendig, so dass die Herstellkosten für derartige Verteiler- oder Sammelrohre hoch sind. Zudem verziehen sich die (Vierkant-) Rohre durch thermische Spannungen, die durch die einseitige Schweißung verursacht werden. Weiter ist die Dichtigkeit, welche mit solchermaßen eingebrachten Trennwänden (Trennplättchen) erreicht werden kann, häufig unbefriedigend, da diese nur bereichsweise mit dem Rohr verschweißt sind und in ihrem übrigen Bereich lediglich an dem Rohr anliegen bzw. in dieses eingeschlagen sind. Zwischen der Trennwand und dem Mantel des Rohres verbleiben daher häufig noch Spalten, durch welche sich Restwasser hindurchdrückt.

Ein verschweißtes Trennwandsystem ist aus der DE 31 10 454 A1 bekannt, wobei zwischen zwei in Form eines C-Profils ausgebildeten Hälften eine längs des Profils verlaufende Trennwand eingeschweißt ist.

Aus der WO 96/27456 A1 sind hohle Stahlschäfte bzw. -rohre bekannt, bei denen zur Verstärkung ein längs im Rohr verlaufendes Band in eine Längsnaht der Rohre eingelötet ist.

Die WO 02/087814 A1 zeigt ein sogenanntes gefaltetes Rohr, bei welchem zur Herstellung des Rohres Flachmaterial zu einem Rohr gefaltet wird, wobei zur Bildung mehrerer Durchströmungskanäle zusätzlich Trennwände aus dem Flachmaterial gefaltet sind und anschließend eine Verschweißung erfolgt.

Es ist daher Aufgabe der vorliegenden Erfindung ein mit wenigstens einer Trennwand versehenes Rohr der eingangs genannten Art bereitzustellen, welches schneller und kostengünstiger herstellbar ist und insbesondere gleichzeitig an seinem Umfang besser abgedichtet ist.

Diese Aufgabe wird erfindungsgemäß im Wesentlichen durch die Merkmale des Anspruches 1 gelöst. Dabei ist die Trennwand zwischen wenigstens zwei Einprägungen des Mantels fixiert. Hierzu wird die Trennwand bspw. mit einem Magneten am Ende eines Stabes gehalten in den Strömungskanal des Rohres eingeführt und dort exakt positioniert. Über ein bspw. hydraulisch betätigtes Prägewerkzeug wird dann beidseits der Trennwand eine Einprägung in dem Mantel des Rohres eingebracht, durch welche die Trennwand in dem Strömungskanal des Rohres festgeklemmt wird. Die von außen aufgebrachte Einprägung in dem Mantel des Rohres bewirkt einen in den Strömungskanal des Rohres ragenden wulstartigen Vorsprung, der sich auf beiden Seiten der Trennwand an diese anschmiegt und die Trennwand festquetscht. Die Trennwand wird auf diese Weise nicht nur in dem Strömungskanal des Rohres an der festgelegten Position gehalten, sondern die Trennwand wird gleichzeitig durch die Einprägungen gegenüber dem Mantel des Rohres abgedichtet. Auf diese Weise entsteht eine sehr gute Dichtigkeit der Trennwand, so dass bspw. eine besonders effektive Wasserumlenkung bei der Verwendung des Rohres als ein Verteilerrohr eines Heiz- oder Kühlsystems erreicht werden kann. Das Einbringen der Prägungen auf den beiden Seiten der Trennwand ist zudem besonders schnell und mit einfachen Mitteln durchführbar, so dass die Herstellkosten eines erfindungsgemäßen Rohres mit Trennwand gegenüber einem nach dem bekannten Verfahren hergestellten Rohr erheblich gesenkt werden können.

Vorzugsweise ist der Mantel eines derartigen Rohres durch wenigstens drei, insbesondere vier, ebene, streifenförmige und miteinander verbundene Seitenwandungen gebildet. Das Rohr ist dann bspw. ein Vierkantrohr. Die Dichtigkeit der Trennwand in dem Rohr kann dadurch weiter verbessert werden, dass die Trennwand in jeder dieser Seitenwandungen durch zwei Einprägungen fixiert ist. Wenn das Rohr durch eine gerade Anzahl von streifenförmigen Seitenwandungen gebildet ist, also bspw. ein Vierkantrohr ist, kann die Prägung gleichzeitig von zwei Seiten in zwei einander gegenüberliegenden Seitenwandungen eingebracht werden. Eine ungleichmäßige Verformung des Rohres kann dadurch vermieden werden.

Die Einprägungen müssen sich dabei nicht über die gesamte Breite der Seitenwandungen erstrecken, sondern können in der Nähe der Kanten des Rohres enden. Auf diese Weise entstehen in diesen Kantenbereichen des Rohres keine Materialanhäufungen, die die Dichtigkeit oder die Befestigung der Trennwand beeinträchtigen könnten.

Zur Erhöhung der Dichtigkeit der Trennwand in dem Rohr können die Einprägungen bspw. im Wesentlichen geradlinig verlaufen, so dass der in den Strömungskanal des Rohres ragende wulstartige Vorsprung eine besonders große Berührungsfläche mit der Trennwand hat. Es ist aber auch möglich, die Einprägungen gekrümmt und/oder abgekantet auszubilden. Insbesondere hat es sich als vorteilhaft erwiesen, eine S-förmige Einprägung auf jeder Seite dem Mantel vorzusehen.

Um eine gute Fixierung der Trennwand in dem Strömungskanal des Rohres bei hoher Dichtigkeit sicherzustellen, hat es sich als besonders vorteilhaft erwiesen, dass sich die Einprägungen auf beiden Seiten der Trennwand wenigstens 180°, insbesondere wenigstens 270° des Rohrumfangs ausmachen.

Zur Verbindung des Rohres mit bspw. Registerrohren eines Rohrregisters können auf beiden Seiten der Trennwand Abzweigöffnungen in dem Mantel vorgesehen sein. Durch die Trennwand wird so ein Heiz- oder Kühlmedium in dem Rohr umgelenkt. Entsprechend der Anzahl der erforderlichen Umlenkungen des Heiz- oder Kühlmediums in dem Rohr können mehrere, bspw. im gleichen Abstand zueinander angeordnete Trennwände in dem Rohr vorgesehen sein.

Im Folgenden wird die Erfindung anhand eines Ausführungsbeispiels und unter Bezugnahme auf die beigefügte Zeichnung näher erläutert.

Es zeigen:
- Fig. 1: schematisch ein Rohr mit einer einzusetzenden Trennwand,
- Fig. 2: das Rohr nach Fig. 1 mit eingesetzter Trennwand und Einprägun- gen, und
- Fig. 3: einen Schnitt durch das Rohr nach Fig. 2.

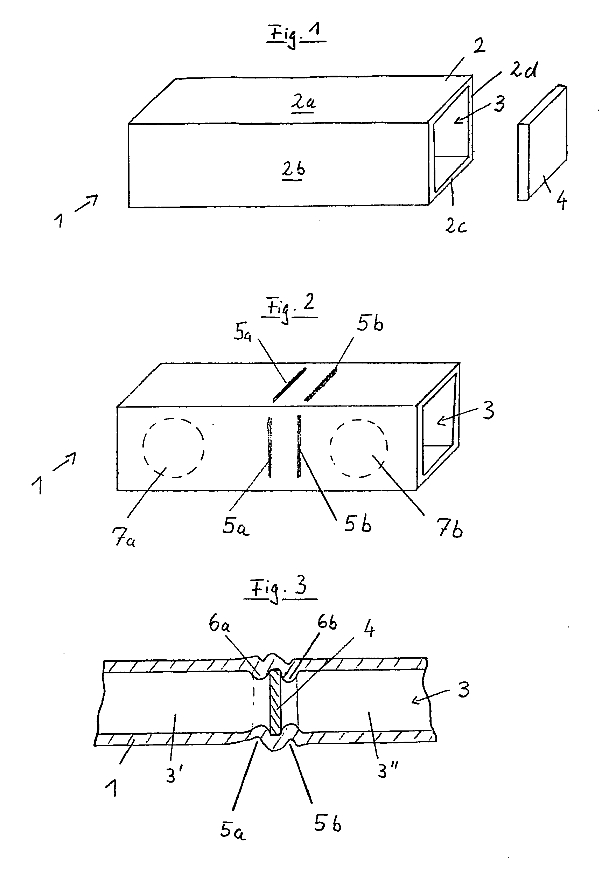

Das in den Figuren dargestellte Rohr 1 ist als Vierkantrohr ausgebildet, d.h. der Mantel 2, der einen zentralen Strömungskanal 3 umgibt, ist aus vier ebenen, streifenförmigen Seitenwandungen 2a, 2b, 2c und 2d gebildet. In das Rohr 1 ist eine in den Fig. 1 und 3 dargestellte Trennwand (Trennplättchen) 4 eingesetzt, deren Größe im Wesentlichen der Größe des von dem Mantel 2 umschlossenen Strömungskanals 3 entspricht. Der Strömungskanal 3 wird dadurch in zwei Kanalabschnitte 3', 3" unterteilt, die durch die Trennwand 4 gegeneinander abgedichtet sind.

Zum Einführen der Trennwand 4 in den Strömungskanal 3 des Rohres 1 kann die Trennwand 4 bspw. mit einem Magneten am Ende eines Stabes gehalten und so weit in das Rohr 1 eingeführt werden, bis die Trennwand 4 ihre bestimmungsgemäße Position erreicht hat.

Zur Befestigen der Trennwand 4 in dem Rohr 1 werden durch ein Prägewerkzeug auf beide Seiten der Trennwand 4 Einprägungen 5a und 5b eingebracht. Wie insbesondere aus der Darstellung von Fig. 3 ersichtlich ist, werden durch diese von außen auf den Mantel 2 des Rohres 1 eingebrachten Einprägungen 5a, 5b wulstartige Vorsprünge 6a bzw. 6b erzeugt, welche in den Strömungskanal 3 des Rohres 1 hineinragen. Die wulstartigen Vorsprünge 6a und 6b schmiegen sich dabei von beiden Seiten an die Trennwand 4 an und fixieren diese in dem Strömungskanal 3 des Rohres 1. Gleichzeitig wird durch dieses Einquetschen der Trennwand 4 zwischen den durch die Einprägungen 5a bzw. 5b erzeugten wulstartigen Vorsprüngen 6a und 6b eine Abdichtung der Trennwand 4 gegenüber dem Rohr 1 erzielt. Die Trennwand 4 kann damit zum Aufstauen oder Umlenken eines in dem Rohr 1 strömenden Mediums eingesetzt werden.

Wie in Fig. 2 dargestellt, sind die Einprägungen geradlinig ausgebildet und erstrecken sich über nahezu die gesamte Breite der Seitenwandungen 2a, 2b, 2c, 2d des Mantels 2. Hierbei enden die Einprägungen 5a und 5b in der Nähe der Kanten des Rohres 1, wodurch eine zu große Materialanhäufung durch die wulstartigen Vorsprünge 6a, 6b im Bereich der Ecken des Vierkantrohres vermieden wird. Die Einprägungen 5a, 5b erstrecken sich dabei jeweils auf beiden Seiten der Trennwand 4 auf etwa 270° des Mantels 2.

Durch ein bspw. hydraulisch betätigtes Prägewerkzeug können die Einprägungen 5a, 5b gleichzeitig auf zwei einander gegenüberliegenden Seitenwandungen 2a, 2c bzw. 2b, 2d eingebracht werden, so dass ungleichmäßige Deformationen des Rohres 1 vermieden werden. Alternativ zu der in den Figuren dargestellten geradlinigen Ausbildungen der Einprägungen 5a, 5b ist es auch möglich, diese gekrümmt und/oder abgeknickt zu gestalten, bspw. durch eine S-förmige Einprägung. Bei entsprechender Gestaltung der Prägewerkzeuge lassen sich auch Rohre mit anderen Querschnitten, bspw. Rundrohre oder Dreikantrohre mit Einprägungen zum Fixieren und Abdichten von Trennwänden versehen.

Durch die Form der Einprägungen 5a, 5b auf dem Mantel 2 des Rohres 1 kann gleichzeitig eine Qualitätskontrolle bezüglich der Fixierung und Abdichtung der Trennwand 4 in dem Rohr 1 durchgeführt werden. So ist die Einprägung weniger tief ausgebildet, wenn diese nicht neben der Trennwand 4 sondern auf der Trennwand 4 aufgebracht wird. Entsprechend sind die Einprägungen tiefer ausgebildet, wenn die Trennwand 4 nicht zwischen ihnen liegt.

Wenn das Rohr 1 als ein Verteiler- oder Sammelrohr bspw. eines Rohrregisters eingesetzt werden soll, können auf beiden Seiten der Trennwand 4 in dem Mantel 2 Abzweigöffnungen 7a, 7b vorgesehen sein, die in Fig. 2 angedeutet sind. Die Trennwand 4 dient dann zur Umlenkung von einem in dem Rohr strömenden Medium, wie bspw. einer Heiz- oder Kühlflüssigkeit. Zum Aufbau eines Rohrregisters mit mehreren Registerrohren, die mäanderförmig durch das Rohr 1 verbunden sind, können entsprechend der Anzahl der Registerrohre mehrere Trennwände 4 durch die Einprägung 5a, 5b in dem Rohr 1 fixiert werden, so dass mehrere abgedichtete Kanalabschnitte 3', 3" gebildet werden.

### Bezugszeichenliste

- 1: Rohr
- 2: Mantel
- 2a, 2b, 2c, 2d: Seitenwandung des Mantels 2
- 3: Strömungskanal
- 3', 3": Kanalabschnitte
- 4: Trennwand (Trennplättchen)
- 5a, 5b: Einprägung
- 6a, 6b: wulstartiger Vorsprung
- 7a, 7b: Abzweigöffnung

## Patentansprüche

1. Rohr mit einem einen Strömungskanal (3) umschließenden Mantel (2), wobei der Strömungskanal (3) von wenigstens einer Trennwand (4) in Kanalabschnitte (3', 3") unterteilt ist, **dadurch gekennzeichnet, dass** die Trennwand (4) so zwischen wenigstens zwei Einprägungen (5a, 5b) des Mantels (2) festgeklemmt ist, dass ein Aufstauen oder Umlenken eines in dem Rohr strömenden Mediums ermöglicht ist.

2. Rohr nach Anspruch 1, **dadurch gekennzeichnet, dass** der Mantel (2) durch wenigstens drei, insbesondere vier, ebene, streifenförmige und miteinander verbundene Seitenwandungen (2a, 2b, 2c, 2d) gebildet ist, und dass die Trennwand (4) zwischen zwei Einprägungen (5a, 5b) jeder dieser Seitenwandungen (2a, 2b, 2c, 2d) fixiert ist.

3. Rohr nach, Anspruch 2, **dadurch gekennzeichnet, dass** sich die Einprägungen (5a, 5b) nicht über die gesamte Breite der Seitenwandungen (2a, 2b, 2c, 2d) erstrecken.

4. Rohr nach einem der Ansprüche 1 bis 3, **dadurch gekennzeichnet, dass** die Einprägungen (5a, 5b) im Wesentlichen geradlinig sind.

5. Rohr nach einem der Ansprüche 1 bis 3, **dadurch gekennzeichnet, dass** die Einprägungen (5a, 5b) gekrümmt und/oder abgekantet, insbesondere S-förmig, sind.

6. Rohr nach einem der Ansprüche 1 bis 5, **dadurch gekennzeichnet, dass** die Einprägungen (5a, 5b) auf beiden Seiten der Trennwand (4) wenigstens 180°, insbesondere wenigstens 270°, des Rohrumfangs ausmachen.

7. Rohr nach einem der Ansprüche 1 bis 6, **dadurch gekennzeichnet, dass** auf beiden Seiten der Trennwand (4) Abzweigöffnungen (7a, 7b) in dem Mantel (2) vorgesehen sind.

## Claims

1. A pipe comprising a casing (2) enclosing a flow channel (3), wherein the flow channel (3) is divided into channel sections (3, 3") by means of at least one partition wall (4), **characterized in that** the partition wall (4) is clamped between at least two embossments (5a, 5b) of the casing (2) in such a manner that a pile-up or diversion of a medium flowing in the pipe is made possible.

2. The pipe according to claim 1, **characterized in that** the casing (2) is formed by means of at least three, in particular four, plane side walls (2a, 2b, 2c, 2d), which are lamellar and which are connected to one another, and **in that** the partition wall (4) is fixed between two embossments (5a, 5b) of each of these side walls (2a, 2b, 2c, 2d).

3. The pipe according to claim 2, **characterized in that** the embossments (5a, 5b) do not extend across the entire width of the side walls (2a, 2b, 2c, 2d).

4. The pipe according to one of claims 1 to 3, **characterized in that** the embossments (5a, 5b) are substantially linear.

5. The pipe according to one of claims 1 to 3, **characterized in that** the embossments (5a, 5b) are curved and/or beveled, in particular S-shaped.

6. The pipe according to one of claims 1 to 5, **characterized in that** the embossments (5a, 5b) on both sides of the partition wall (4) constitute at least 180°, in particular at least 270° of the circumference of the pipe.

7. The pipe according to one of claims 1 to 6, **characterized in that** provision is made in the casing (2) on both sides of the partition wall (4) for branch apertures (7a, 7b).

## Revendications

1. Tuyau avec une gaine (2) comprenant un canal d'écoulement (3), le canal d'écoulement (3) étant divisé en tronçons de canal (3', 3'') par au moins une paroi séparatrice (4), **caractérisé en ce que** 1a paroi séparatrice (4) est bloquée de telle manière entre au moins deux rainures (5a, 5b) de la gaine (2), que cela permet une accumulation ou une déviation du liquide s'écoulant dans le tuyau.

2. Tuyau selon 1a revendication 1, **caractérisé en ce que** 1a gaine (2) est constituée d'au moins trois, plus particulièrement de quatre parois latérales (2a, 2b, 2c, 2d) planes, en forme de bandes et reliées entre elles, et **en ce que** 1a paroi séparatrice (4) est fixée entre deux rainures (5a, 5b) de chacune de ces parois latérales (2a, 2b, 2c, 2d).

3. Tuyau selon la revendication 2, **caractérisé en ce que** les rainures (5a, 5b) ne s'étendent pas sur 1a totalité de 1a largeur des parois latérales (2a, 2b, 2c, 2d).

4. Tuyau selon l'une des revendications 1 à 3, **caractérisé en ce que** les rainures (5a, 5b) sont essentiellement rectilignes.

5. Tuyau selon l'une des revendications 1 à 3, **caractérisé en ce que** les rainures (5a, 5b) sont courbées et/ou biseautées, plus particulièrement en forme de S.

6. Tuyau selon l'une des revendications 1 à 5, **caractérisé en ce que** les rainures (5a, 5b) des deux côtés de 1a paroi séparatrice (4) s'étendent sur au moins 180°, plus particulièrement sur au moins 270° de 1a circonférence du tuyau.

7. Tuyau selon l'une des revendications 1 à 6, **caractérisé en ce que** des ouvertures d'embranchement (7a, 7b) sont prévues dans 1a gaine (2), des deux côtés de 1a paroi séparatrice (4).
